# FASCICULE DE BREVET EUROPEEN

(11) **EP 4 457 115 B1**
(45) Date de publication et mention de la délivrance du brevet: **11.02.2026**
(21) Numéro de dépôt: 22836165.5
(22) Date de dépôt: 15.12.2022
(51) Int. Cl.: B60L 3/12, B60L 53/00, B60L 58/12, B60L 58/16

(54) **PROCÉDÉ ET UN SYSTÈME DE GESTION D'UN DISPOSITIF DE BATTERIE ÉLECTRIQUE D'UN VÉHICULE À MOTORISATION ÉLECTRIQUE OU HYBRIDE**
VERFAHREN UND SYSTEM ZUR VERWALTUNG EINER ELEKTRISCHEN BATTERIEVORRICHTUNG EINES ELEKTRO- ODER HYBRIDFAHRZEUGS
METHOD AND SYSTEM FOR MANAGING AN ELECTRIC BATTERY DEVICE OF AN ELECTRIC OR HYBRID MOTOR VEHICLE

(30) Priorité: 27.12.2021 FR 2114541
(43) Date de publication de la demande: 06.11.2024
(73) Titulaire: Ampere SAS, 92100 Boulogne-Billancourt (FR)
(72) Inventeur: GYAN, Philippe, 78084 GUYANCOURT CEDEX (FR); PEREZ CHUECOS, Martin, 78084 GUYANCOURT CEDEX (FR)
(74) Mandataire: Renault Group
(86) Numéro de dépôt international: PCT/EP2022/086047
(87) Numéro de publication internationale: WO 2023/126191

(56) Documents cités:
- DE-A1- 102015 207 300
- DE-A1- 102019 000 813
- JP-A- 2009 001 049

## Description

L'invention concerne un procédé et un système de gestion d'un dispositif de batterie électrique. L'invention porte encore sur un véhicule automobile à motorisation électrique ou hybride équipé dudit système et/ou mettant en œuvre ledit procédé.

Les véhicules à motorisation hybride ou électrique sont équipés d'un dispositif de batterie, aussi appelé « batterie », dispositif de stockage d'énergie électrique ou « battery pack » en Anglais, apte à alimenter en énergie électrique au moins un élément d'une chaîne de traction électrique du véhicule. Notamment, les dispositifs de batterie actuellement utilisés dans les véhicules électriques ou les véhicules hybrides sont principalement basés sur la technologie Lithium-ion. En utilisation, le dispositif de batterie est contrôlé et surveillé par un système de gestion dédié, dit « Battery Management System » en Anglais ou « BMS », de manière à surveiller et contrôler l'état et le fonctionnement des différentes module et cellules le composant. Un tel système permet classiquement d'évaluer l'état de charge du dispositif, ou SOC de l'anglais « State of Charge », ainsi que son état de santé, ou SOH pour « State of Health » en Anglais, notamment son vieillissement.

De manière connue, le vieillissement du dispositif de batterie est accéléré de manière exponentielle lorsqu'il présente des températures élevées, résultant de son échauffement du fait de son utilisation et/ou de températures ambiantes extérieures, notamment de l'ordre de 45 ou 50°C. Un tel vieillissement s'accompagne d'une perte de capacité du dispositif de batterie ainsi que d'une augmentation de sa résistance interne. Il en résulte une réduction de la durabilité du dispositif de batterie non négligeable, pouvant se compter en années. Si les véhicules sont classiquement équipés de systèmes de traitement thermique permettant le refroidissement du dispositif de batterie, ceux-ci ne sont fonctionnels que lorsque le véhicule est en cours d'utilisation, par exemple en phase de roulage, de décharge ou de charge, mais non lorsque le véhicule est arrêté, à l'état stationnaire.

Il a également été constaté que, à une température donnée, le vieillissement du dispositif de batterie est amené à varier en fonction de l'état de charge. En particulier, le vieillissement est accéléré lorsque le dispositif de batterie est à un niveau de charge de 100%, correspondant à une charge au maximum de la capacité de charge du dispositif de batterie, ou voisin de 100%, relativement à un état de charge nettement inférieur à un tel maximum de capacité, entraînant de ce fait encore une réduction de la durabilité du dispositif. L'importance d'une telle réduction de la durabilité est d'autant plus importante que la température augmente.

Les véhicules étant amenés à être dans un état stationnaire l'essentiel du temps, voire jusqu'à 90% ou 95% du temps, il est primordial d'assurer que ces périodes d'état stationnaire s'effectuent, dans la mesure du possible, dans des conditions optimisant la durabilité du dispositif de batterie, particulièrement lorsque les conditions extérieures, notamment la température ambiante extérieure, est susceptible d'affecter le dispositif de batterie.

La demande de brevet DE102019000813A1 décrit un procédé de charge permettant, afin d'éviter un vieillissement accéléré de la batterie, d'ajuster continument l'état de charge maximum en fonction de la température. Toutefois, cette solution est sensible aux augmentations brèves de la température et limite souvent indûment l'état de charge maximum, alors que seules les augmentations prolongées, par exemple les canicules, impactent le vieillissement de la batterie.

L'invention s'inscrit dans ce contexte et vise à fournir un procédé et un système de gestion du dispositif de batterie remédiant aux inconvénients susnommés. En particulier, l'invention vise à assurer une gestion affinée du dispositif de batterie lors de phases stationnaires comprises entre des évènements de charge.

Selon l'invention, un procédé permet de gérer un dispositif de batterie électrique pour un véhicule à motorisation électrique ou hybride. Le procédé comprend, en prévision d'une charge du dispositif de batterie, une étape de détection d'une température ambiante extérieure au véhicule par au moins un capteur et une étape de comparaison de la température ambiante extérieure mesurée avec un premier seuil de température prédéfini. Le procédé comprend, en outre, lorsque la température mesurée est supérieure ou égale au premier seuil :
- une étape d'activation d'une phase de surveillance de la température extérieure afin d'effectuer, par l'intermédiaire de l'au moins un capteur, une mesure de la température ambiante extérieure à intervalle de temps prédéterminé et d'enregistrer ladite mesure sur une unité de mémoire ; et
- une étape de calcul d'une médiane ou d'une moyenne des mesures de température ambiante extérieure réalisées depuis un instant t₀ d'activation de la phase de surveillance et une étape de comparaison de ladite médiane ou de ladite moyenne avec un deuxième seuil de température et/ou un troisième seuil de température prédéfinis, le troisième seuil étant supérieur au deuxième seuil ; et
- une étape de programmation de la limitation d'un niveau maximal autorisé de charge du dispositif de batterie, par l'intermédiaire d'un module de contrôle, à un niveau intermédiaire (N_{c_max_care}) de charge, inférieur à une capacité maximale de charge du dispositif de batterie, mise en œuvre lorsque la médiane ou la moyenne de température est supérieure ou égale au troisième seuil ;
- une étape de programmation de la limitation du niveau maximal autorisé de charge du dispositif à un niveau de charge intégrale, égal à la capacité maximale de charge du dispositif de batterie, et une étape d'interruption de la phase surveillance, lesdites étapes étant mises en œuvre lorsque la médiane ou la moyenne de température est inférieure au deuxième seuil.

Le procédé peut comprendre, suite à l'activation de la phase de surveillance, une étape de détermination d'un temps écoulé depuis l'activation de la phase de surveillance et une étape de comparaison du temps écoulé déterminé avec un seuil minimal de temps d'activation prédéfini, l'étape de programmation de la limitation adaptée étant mise en œuvre seulement lorsque le temps écoulé est supérieur ou égal au seuil minimal de temps d'activation.

Le procédé peut comprendre, en outre, une étape de détection d'une intensité lumineuse extérieure au véhicule et une étape de comparaison de l'intensité lumineuse mesurée avec un seuil de luminosité prédéfini, l'étape de programmation de la limitation adaptée étant mise en œuvre seulement lorsque le niveau d'intensité lumineuse mesuré est supérieur ou égal à un seuil de temps prédéfini.

Le procédé peut comprendre, en outre, une étape de mesure d'une température du dispositif de batterie et une étape de comparaison de la température mesurée avec un seuil de détection d'un échauffement du dispositif, prédéfini, l'étape de programmation de la limitation à un niveau intermédiaire de charge étant mise en œuvre seulement lorsque la température mesurée du dispositif de batterie est supérieure ou égale au seuil de détection d'un échauffement du dispositif de batterie.

Le procédé peut comprendre, en outre, une étape d'ajustement de l'intervalle de temps auquel les mesures de la température ambiante extérieure sont effectuées en fonction d'au moins un paramètre extérieur au véhicule.

Le procédé peut comprendre, préalablement à l'étape de programmation de la limitation adaptée, une étape de détection d'un besoin de mobilité, programmé ou renseigné par l'utilisateur, l'exécution de l'étape de programmation de la limitation à un niveau intermédiaire de charge étant soumise à une condition d'acceptation de ladite limitation par un utilisateur du véhicule.

Selon l'invention, un procédé permet de charger un dispositif de batterie et comprend, dans un premier temps, l'ensemble des étapes du procédé de gestion défini précédemment, puis une étape de charge du dispositif de batterie au cours de laquelle le niveau maximal autorisé de charge est limité au niveau de charge, intégrale ou intermédiaire, préalablement défini.

Le procédé de charge peut comprendre une étape de détection d'une charge du véhicule et une étape d'interruption de la phase de surveillance dès lors qu'une charge est mise en œuvre.

Selon l'invention, un système permet de gérer un dispositif de batterie électrique comprenant des éléments matériels et/ou logiciels mettant en œuvre le procédé de gestion défini précédemment, les éléments matériels comportant au moins un capteur de température ambiante extérieure, une unité de traitement apte à recevoir des mesures de l'au moins un capteur, une unité de mémoire et un module de contrôle du dispositif de batterie.

Selon l'invention, un véhicule automobile à motorisation hybride ou électrique comprend au moins un dispositif de batterie électrique et un système de gestion défini précédemment.

Selon l'invention, un produit programme d'ordinateur comprend des instructions de code de programme enregistrées sur un support lisible par ordinateur pour mettre en œuvre les étapes de l'un et/ou l'autre des procédés définis précédemment et/ou pour mettre en œuvre les étapes des procédés définis précédemment lorsque ledit programme fonctionne sur un ordinateur.

Selon l'invention, un produit programme d'ordinateur téléchargeable depuis un réseau de communication et/ou enregistré sur un support de données lisible par un ordinateur et/ou exécutable par un ordinateur, est caractérisé en ce en ce qu'il comprend des instructions qui, lorsque le programme est exécuté par l'ordinateur, conduisent celui-ci à mettre en œuvre l'un et/ou l'autre des procédés définis.

L'invention porte aussi sur un support d'enregistrement de données, lisible par un ordinateur, sur lequel est enregistré un programme d'ordinateur comprenant des instructions de code de programme de mise en œuvre de l'un et/ou l'autre des procédés définis ou sur un support d'enregistrement lisible par ordinateur comprenant des instructions qui, lorsqu'elles sont exécutées par un ordinateur, conduisent celui-ci à mettre en œuvre l'un et/ou l'autre des procédés définis.

L'invention porte aussi sur un signal d'un support de données portant le produit programme d'ordinateur tel que défini précédemment.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 représente schématiquement un mode de réalisation d'un véhicule équipé d'un système de gestion d'un dispositif de batterie.
La figure 2 est un ordinogramme d'un exemple d'exécution d'un procédé de gestion du dispositif de batterie.
La figure 3 est un ordinogramme d'un exemple d'exécution particulier du procédé du dispositif de batterie illustré à la figure 2.
La figure 4 est un ensemble de diagrammes détaillant un exemple d'exécution du procédé de gestion en fonction du temps.

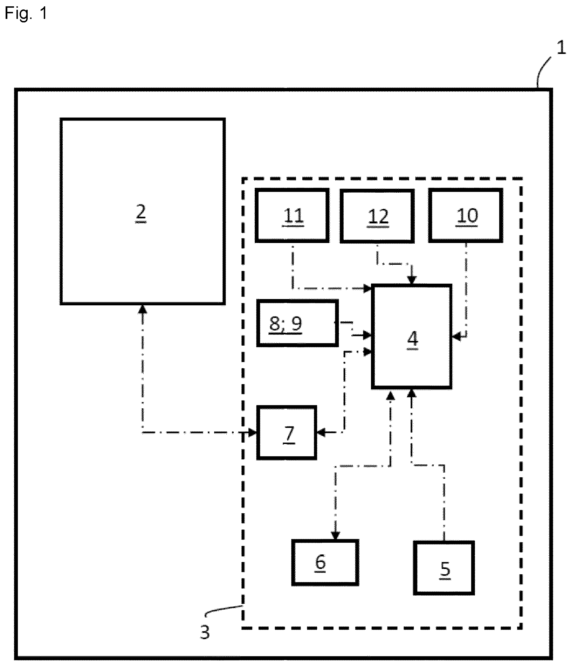

La figure 1 illustre schématiquement un exemple de réalisation d'un véhicule 1 automobile à motorisation électrique ou hybride selon l'invention. Le véhicule 1 peut être de toute nature, c'est-à-dire qu'il peut s'agir d'un véhicule particulier, d'un véhicule utilitaire, d'un camion ou d'un bus. Egalement, le véhicule peut être un véhicule autonome ou non autonome.

Le véhicule 1 est équipé d'un dispositif de batterie 2 électrique, aussi qualifié de « batterie », « dispositif de stockage d'énergie électrique » ou encore « battery pack» en anglais, configuré pour alimenter un ou plusieurs élément(s) d'une chaîne d'entraînement électrique du véhicule 1, non représentée, en énergie électrique. Par exemple, il peut alimenter un moteur électrique. Le dispositif de batterie 2 comprend une pluralité de modules comportant chacun une pluralité de cellules électrochimiques, notamment des cellules du type Lithium-ion.

Le véhicule 1 est, en outre, équipé d'un système de gestion 3 du dispositif de batterie 2. Le système de gestion 3 comprend des éléments matériels et/ou logiciels mettant en œuvre un procédé de gestion tel qu'exposé ci-après. Les éléments matériels comportent une unité de traitement 4 et un ou plusieurs capteur(s) 5 de mesure de la température ambiante extérieure au véhicule 1. Le système peut en outre comprendre une unité de mémoire 6 et un module de contrôle 7 du dispositif de batterie 2.

L'unité de traitement 4 comprend au moins un calculateur comportant des ressources matérielles et logicielles plus précisément au moins un processeur, ou microprocesseur. L'unité de traitement 4 coopère avec l'unité de mémoire 6 et est apte à recevoir des données transmises par le ou les capteur(s) 5 de température. L'unité de traitement 4 est apte à exécuter des instructions pour la mise en œuvre d'un programme d'ordinateur.

Le module de contrôle 7 est configuré pour recevoir des données et/ou des instructions issues de l'unité de traitement 4. Il est apte à modifier le fonctionnement du dispositif de batterie 2, notamment afin de modifier une valeur d'un niveau maximal autorisé de charge N_{c_max} dudit dispositif selon le besoin, et afin d'actionner l'au moins un capteur 5 de température afin de déclencher la prise de mesure. Le module de contrôle 7 peut, à titre d'exemple non limitatif, être un contrôleur électronique du véhicule.

De manière optionnelle, le système de gestion 3 peut également comprendre au moins l'un parmi :
- au moins un capteur 8 d'intensité lumineuse extérieure au véhicule 1 ;
- au moins un capteur 9 de température du dispositif de batterie 2 ;
- un moyen de localisation 10 du véhicule 1 ;
- un moyen de communication 11 avec un appareil connecté et/ou un serveur distant ;
- une interface Homme-machine 12.

Le système de gestion 3 peut par exemple comprendre un unique capteur 8 d'intensité lumineuse dont les mesures sont transmises à l'unité de traitement 4. Alternativement, le système de gestion 3 peut comprendre une pluralité desdits capteurs 8 arrangés en différents points du véhicule 1, les différentes mesures d'intensité lumineuse peuvent alors être transmises à l'unité de traitement 4 qui en extrait la moyenne.

Similairement, le système de gestion peut comprendre au moins un capteur 9 de température du dispositif de batterie 2. Notamment, un tel capteur 9 peut être compris dans un calculateur du type BMS, de l'anglais « Battery Management System ». Le système peut comprendre un unique capteur 9 mesurant une température du dispositif de batterie 2 en un point ou, de manière alternative, une pluralité de capteurs 9 mesurant la température des différents modules et/ou cellules du dispositif de batterie 2 qui sont ensuite transmises à l'unité de traitement 4, laquelle extrait, sur la base desdites mesures, une moyenne de température représentative de la température du dispositif de batterie 2, ainsi que la valeur maximale et la valeur minimale desdites températures. A titre d'exemple, et pour une protection plus efficace du dispositif de batterie 2, la température maximale peut être retenue pour être transmise à l'unité de traitement 4.

Le moyen de localisation 10 permet la localisation du véhicule 1 dans l'infrastructure routière. Il intègre, par exemple, un système de localisation approximative du véhicule 1 et/ou une cartographie haute définition de l'infrastructure routière. Notamment, la localisation approximative du véhicule 1 peut être fournie par un système de type GPS, de l'acronyme anglais « Global Positioning System ». Alternativement ou en complément, le moyen de localisation 10 peut être un système de localisation embarqué dans le véhicule 1, qui intègre les mouvements du véhicule 1 en permanence.

Le moyen de communication 11 permet au véhicule 1 de recevoir les données issues d'un appareil connecté, tel qu'un téléphone, une montre ou un agenda, au moyen d'une liaison sans fil, basse fréquence ou haute fréquence. Il peut, par exemple, s'agir d'une liaison sans fil basée sur des technologies « cellulaire», « Bluetooth » ou « Wifi ».

L'interface Homme-machine 12 peut comprendre un écran apte à diffuser, de manière non limitative, des informations relatives au déroulé du procédé ou encore à un état du dispositif de batterie 2.

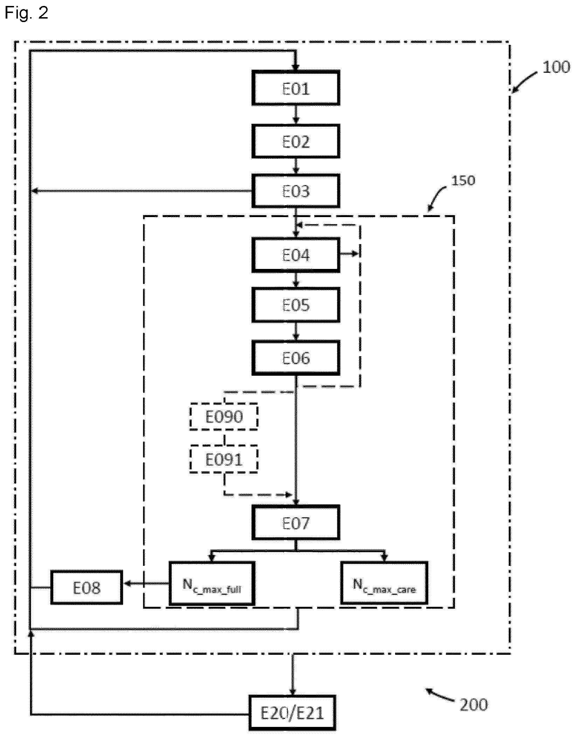

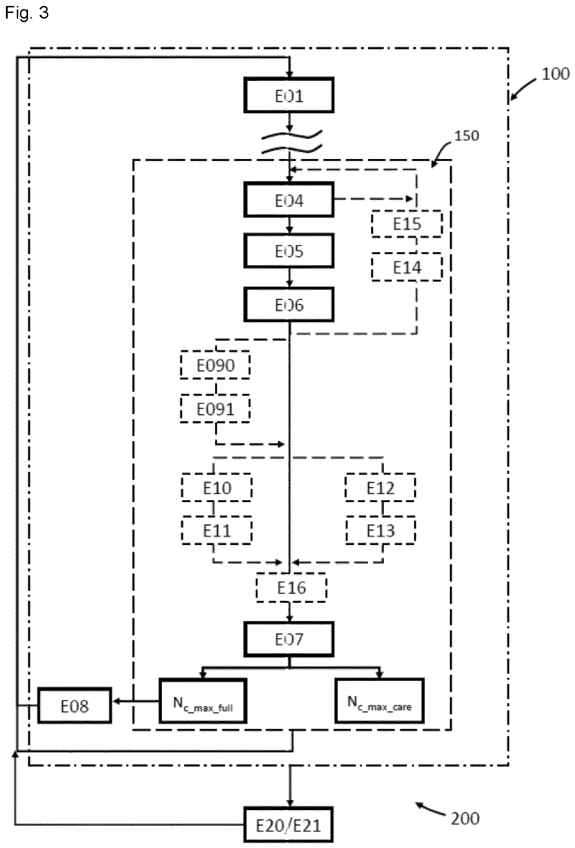

Les figures 2 et 3 illustrent un mode d'exécution d'un procédé de gestion 100 du dispositif de batterie 2 en prévision d'une charge du dispositif de batterie 2. Autrement dit, ledit procédé est essentiellement exécuté préalablement à l'exécution d'une charge du dispositif de batterie 2, notamment d'une charge dite « normale », d'une charge rapide, ou « Fast charge », d'une charge ultra rapide, ou « Ultra fast charge », ou encore d'une charge régénérative résultant d'un freinage régénératif lors d'une phase de roulage. Le procédé peut être exécuté lors d'une phase stationnaire, dans laquelle le véhicule est à l'arrêt, ou lors d'une phase de roulage, en amont d'une phase de charge du dispositif de batterie. Le procédé est également assimilable à un procédé de fonctionnement, ou d'utilisation, du système de gestion 3 tel que précédemment exposé.

De manière générale, le procédé de gestion 100 comprend, en prévision d'une charge du dispositif de batterie 2, une étape de détection E01 d'une température ambiante extérieure T_{amb} au véhicule 1 par l'au moins un capteur 5 de température. L'étape de détection E01 peut être initiée par le module de contrôle 7 de manière périodique à une fréquence prédéfinie espacée, par exemple de l'ordre d'une à deux fois par jour. Le procédé est alors dans une phase assimilable à une veille, peu de mesures sont effectuées. Le module de contrôle 7 déclenche au moins un capteur 5 de la température ambiante extérieure. La mesure réalisée est transmise à l'unité de traitement 4 qui met en œuvre une étape de comparaison E02 de la température ambiante extérieure T_{amb} mesurée avec un premier seuil Sₜₕ₁ de température prédéfini, correspondant à un seuil de déclenchement d'une surveillance. De manière préférentielle, le premier seuil Sₜₕ₁ de température peut être compris entre 35 et 50°C, par exemple être de l'ordre de 40 ou 45°C.

Si la température ambiante extérieure T_{amb} mesurée est inférieure au premier seuil Sₜₕ₁, le procédé peut être interrompu de manière anticipée, c'est-à-dire que le système de gestion continue de simplement effectuer une étape de détection E01 de la température ambiante extérieure T_{amb} de manière périodique. A l'inverse, si la température ambiante extérieure T_{amb} mesurée est supérieure ou égale au premier seuil Sₜₕ₁, c'est-à-dire que la température extérieure atteint des valeurs d'échauffement susceptibles d'affecter le dispositif de batterie 2, le système de gestion 3 met en œuvre une phase de surveillance 150, particulièrement une phase de surveillance de la température ambiante extérieure, comprenant tout ou partie des différentes étapes exposées ci-après.

En particulier, le module de contrôle 7 exécute une étape d'activation E03 de la phase de surveillance 150 de la température ambiante extérieure T_{amb}. La phase de surveillance 150 comprend une étape de mesure E04 répétée de la température ambiante extérieure T_{amb} à intervalle de temps *I_{m_x}* prédéterminé. Ces mesures sont réalisées de manière périodique par l'intermédiaire de l'au moins un capteur 5 de température, lequel est actionné par le module de contrôle 7. Lesdites mesures sont ensuite enregistrées sur l'unité de mémoire 6.

L'intervalle de temps *I_{m_x}* peut être un intervalle de temps fixe. L'intervalle de temps *I_{m_x}* est particulièrement défini de manière à ce que les mesures soient réalisées à une fréquence plus élevée que la fréquence de mesure de l'étape de détection E02. A titre d'exemple non limitatif, l'intervalle de temps *I_{m_x}* peut être compris entre 2 et 6 heures, par exemple de l'ordre de 4 heures. Selon un exemple d'exécution non limitatif, davantage exposé ci-après et visible à la figure 3, l'intervalle de temps *I_{m_x}* prédéfini peut être amené à varier avec le temps, par exemple afin de varier au fil de la journée ou au fil d'une semaine, notamment en fonction du contexte extérieur au véhicule 1. Par exemple, l'intervalle de temps peut varier fonction de l'heure, en fonction d'une intensité lumineuse, détectée par l'intermédiaire d'au moins un capteur 5 d'intensité lumineuse, de la localisation du véhicule 1, obtenue par l'intermédiaire du moyen de localisation 10, et/ou de conditions météorologiques détectées, par exemple par l'intermédiaire d'un appareil connecté.

Une fois qu'une pluralité de mesures de la température ambiante extérieure a été réalisée, l'unité de traitement 4 met en œuvre une étape de calcul E05 d'une médiane ou d'une moyenne T_{m_amb} des mesures de la température ambiante extérieure T_{amb} réalisées depuis un instant t₀ d'activation de la phase de surveillance 150. La médiane ou moyenne T_{m_amb} ainsi obtenue est ensuite comparée E06 avec un deuxième seuil Sₜₕ₂ de température et/ou un troisième seuil Sₜₕ₃ de température prédéfinis, le troisième seuil Sₜₕ₃ étant supérieur au deuxième seuil Sₜₕ₂. Le deuxième seuil Sₜₕ₂ correspond à un seuil de désactivation de la phase de surveillance, c'est-à-dire un seuil en deçà duquel la température ambiante extérieure n'est pas susceptible d'endommager le dispositif de batterie et pour laquelle la phase de surveillance peut être interrompue. Un tel seuil peut être inférieur ou égal au premier seuil Sₜₕ₁. Par exemple, il peut être compris entre 30 et 40°C, notamment être de l'ordre de 30°C. A l'inverse, le troisième seuil Sₜₕ₃ correspond à un seuil de température pour lequel il est connu d'observer une réduction de la durabilité du dispositif de batterie 2. Le troisième seuil Sₜₕ₃ peut être supérieur ou égal au premier seuil Sth1.

Avantageusement, les étapes de calcul E05 de la médiane ou moyenne T_{m_amb} et de comparaison E06 sont répétées à la suite de chaque nouvelle mesure de la température ambiante extérieure T_{amb} mise en œuvre lors de la phase de surveillance de manière à actualiser une médiane ou moyenne T_{m_amb} précédemment calculée avec la dernière mesure de température ambiante extérieure T_{amb} réalisée.

Selon le résultat de la comparaison E06 réalisée par l'unité de traitement 4, soit le système de gestion 3 met en œuvre une étape de programmation de la limitation E07 du niveau de charge maximale autorisée N_{c_max} du dispositif de batterie 2 à un niveau adapté, comme décrit ci-après, soit les différentes étapes de mesure E04, de calcul de la médiane ou moyenne E05 et de comparaison E06 sont répétées de manière périodique selon l'intervalle de temps prédéfini jusqu'à ce qu'un résultat déclenchant une étape de programmation de la limitation E07 soit obtenu.

Lorsque la médiane ou moyenne T_{m_amb} de température est supérieure ou égale au troisième seuil Sₜₕ₃, c'est-à-dire qu'il est constaté une température susceptible de générer une accélération du vieillissement du dispositif de batterie 2, l'étape de programmation de la limitation E07 est exécutée de manière à limiter, par l'intermédiaire du module de contrôle 7, le niveau maximal autorisé de charge N_{c_max} du dispositif de batterie 2 à un niveau intermédiaire de charge N_{c_max_care}, inférieur à une capacité maximale de charge du dispositif de batterie 2. De la sorte, au moins une charge à venir du dispositif de batterie 2, exécutée directement ultérieurement à la mise en œuvre du procédé de gestion 100 selon l'invention, sera contrainte à une telle limitation et la charge ne pourra être réalisée que jusqu'au niveau intermédiaire de charge N_{c_max_care} défini, et non jusqu'au maximum de capacité de charge du dispositif de batterie 2. Il est entendu qu'un tel principe n'est valable qu'à condition que, au moment de l'exécution du procédé selon l'invention et au moment de la mise en œuvre d'une charge, l'état de charge, ou SOC, du dispositif de batterie soit inférieur au niveau intermédiaire de charge N_{c_max_care}.

A titre d'exemple non limitatif, un tel niveau intermédiaire de charge N_{c_max_care} peut être compris entre 75 et 95% de la capacité maximale de charge du dispositif de batterie 2. Notamment, le niveau intermédiaire de charge N_{c_max_care} peut être de l'ordre de 80% de la capacité maximale de charge du dispositif de batterie 2.

Egalement, le niveau intermédiaire de charge N_{c_max_care} peut être défini à une valeur fixe, préprogrammée ou, de manière alternative, peut être variable. Par exemple, la valeur du niveau intermédiaire de charge N_{c_max_care} peut être sélectionné, en fonction de la médiane ou moyenne de température calculée, parmi une pluralité de valeur intermédiaire, inférieures à la capacité maximale de charge du dispositif de batterie. Une telle sélection peut être réalisée sur la base d'une cartographie 2D définie en fonction de la température. Alternativement, la valeur du niveau intermédiaire de charge N_{c_max_care} peut être calculée en fonction de la valeur du niveau intermédiaire de charge N_{c_max_care} et d'un objectif de durabilité.

Lorsque la médiane ou moyenne T_{m_amb} de température obtenue est inférieure au deuxième seuil Sₜₕ₂, c'est-à-dire qu'il est détecté que la température ambiante extérieure n'est pas susceptible d'affecter la durabilité du dispositif de batterie 2, l'étape de programmation de la limitation E07 du niveau maximal autorisé de charge du dispositif est exécutée de manière à fixer, pour au moins une charge à venir, le niveau maximal autorisé de charge N_{c_max} à un niveau de charge intégrale N_{c_max_full}, égal à la capacité maximale de charge du dispositif de batterie 2. Autrement dit, il n'y a alors pas de limitation de la capacité de charge. En outre, le système de gestion 3 ordonne l'interruption E08 de la phase de surveillance 150. Le système de gestion 3 peut alors initier un nouveau cycle d'exécution du procédé selon l'invention et entrer dans une phase de veille pendant laquelle la température ambiante extérieure est mesurée de manière périodique, tel qu'exposé en référence à l'étape E01, dans l'attente du déclenchement d'une nouvelle phase de surveillance 150.

Un tel procédé permet ainsi avantageusement le déclenchement automatisé préventif de la limitation du niveau maximal autorisé de charge à une valeur adaptée en fonction de la température ambiante extérieure. Le procédé est, en outre, avantageusement configuré de manière à prévenir un déclenchement inopiné, résultant d'une mesure isolée de température susceptible d'être erronée, par exemple du fait de l'environnement extérieur immédiat du véhicule 1.

Selon un mode de réalisation particulier, optionnel, le procédé selon l'invention peut comprendre, suite à l'activation E03 de la phase de surveillance 150 à l'instant t₀, une étape de détermination E090 d'un temps écoulé t_{act} depuis ladite activation et une étape de comparaison E091 du temps écoulé t_{act} déterminé avec un seuil minimal de temps d'activation S_{act_min} prédéfini. L'étape de programmation de la limitation E07 adaptée, telle qu'exposé précédemment, peut alors être mise en œuvre seulement lorsque le temps écoulé déterminé t_{act}, relativement à l'instant t₀, est supérieur ou égal au seuil minimal de temps d'activation S_{act_min}. Selon un exemple non limitatif, un tel seuil minimal peut être défini de manière à assurer la prise d'au moins trois mesures de température ambiante extérieure. Par exemple, pour des mesures répétées effectuées à un intervalle *I_{m_x}* de 4 heures, le seuil minimal de temps d'activation peut être de 10 heures, de sorte que l'étape de programmation de la limitation E07 du niveau maximal de charge N_{c_max} est mise en œuvre seulement après la prise de trois mesures de température ambiante extérieure. Notamment, des mesures peuvent être réalisées lorsque le temps écoulé est de 10 heures, 14 heures et 18 heures.

La figure 3 illustre des modes alternatifs d'exécution du procédé de gestion 100 selon l'invention comprenant, en outre, la confirmation d'une situation extérieure détectée, via les mesures de température ambiante extérieure, par l'intermédiaire d'au moins un autre paramètre également représentatif de ladite situation.

Selon un premier exemple d'exécution, le procédé peut comprendre une confirmation de la situation détectée par l'intermédiaire de l'analyse de l'intensité lumineuse Lₑₓₜ extérieure au véhicule 1. En ce sens, le procédé de gestion 100 comprend une étape de détection E10 d'une intensité lumineuse Lₑₓₜ extérieure au véhicule 1 et une étape de comparaison E11 de l'intensité lumineuse Lₑₓₜ mesurée avec au moins un seuil de luminosité S_{L_ext} prédéfini.

Un tel principe vise à confirmer que les mesures de température ambiante extérieure T_{amb} réalisées ne sont pas biaisées, par exemple du fait d'un élément compris dans l'environnement immédiat du véhicule 1 ou de l'utilisation qui est faite du véhicule. Notamment, lorsque le procédé selon l'invention est effectué lors d'une phase de roulage, l'impact du vent sur le véhicule est susceptible d'affecter la mesure de la température ambiante.

L'exécution de l'étape de programmation de la limitation E07 adaptée peut ainsi être subordonnée au résultat d'une telle mesure de l'intensité lumineuse Lₑₓₜ. Notamment, elle peut être mise en œuvre seulement lorsque le niveau d'intensité lumineuse Lₑₓₜ mesuré est supérieur ou égal à l'au moins un seuil d'intensité lumineuse prédéfini. Par exemple, un tel seuil peut être de l'ordre de 50000 lux ou 100000 lux, correspondant à un niveau d'irradiation solaire susceptible de provoquer des échauffements du dispositif de batterie 2.

Alternativement, un ou plusieurs seuils d'intensité lumineuse S_{L_ext} peuvent être définis de manière à distinguer, ou catégoriser, si la mesure est réalisée le jour ou la nuit et/ou de manière à évaluer au moins partiellement les conditions météorologiques, par exemple un temps ensoleillé ou couvert, et/ou un environnement immédiat du véhicule 1, par exemple illuminé ou ombragé. L'exécution de l'étape de programmation de la limitation E07 adaptée peut alors être subordonnée au résultat d'une telle catégorisation de la mesure de l'intensité lumineuse Lₑₓₜ.

Un principe similaire s'applique, *mutatis mutandis,* à l'évaluation de la température du dispositif de batterie 2. Le procédé peut ainsi comprendre, alternativement ou additionnellement aux étapes relatives à la mesure de l'intensité lumineuse Lₑₓₜ précédemment exposées, une confirmation de la situation détectée basée sur l'évaluation de la température T_{batt} du dispositif de batterie 2. Le procédé comprend alors une étape de mesure E12 d'une température T_{batt} du dispositif de batterie 2 et une étape de comparaison E13 de la température T_{batt} mesurée avec un seuil de détection S_{T_batt} d'un échauffement du dispositif, prédéfini. La mesure de la température T_{batt} du dispositif de batterie 2 peut être réalisée en un point, par exemple au moins d'un unique capteur 9 compris dans le calculateur BMS du dispositif de batterie 2, ou, de manière alternative, peut être obtenue par calcul d'une médiane ou moyenne de températures mesurées des différentes cellules et/ou module du dispositif de batterie 2, alors obtenues par une pluralité de capteurs.

Comme précédemment, l'exécution de l'étape de programmation de la limitation E07 adaptée peut alors être subordonnée à la température du dispositif de batterie 2. Par exemple, la limitation du niveau maximal autorisé de charge N_{c_max} est limitée à une valeur intermédiaire N_{c_max_care} seulement lorsque la température T_{batt} mesurée du dispositif de batterie 2 est supérieure ou égale au seuil de détection S_{T_batt} d'un échauffement du dispositif de batterie 2. A titre d'exemple non limitatif, le seuil de détection d'un échauffement du dispositif de batterie 2 peut être compris entre 40 et 50°C, par exemple de l'ordre de 45°C.

Tel qu'illustré, le procédé peut ainsi comprendre, de manière optionnelle, l'une et/ou l'autre desdites étapes de confirmation. Selon différentes alternatives, les mesures d'intensité lumineuse Lₑₓₜ et/ou de température T_{batt} du dispositif de batterie 2 peuvent être réalisées simultanément aux mesures E04 de la température ambiante extérieure T_{batt}, répétées, ou ultérieurement, par exemple lors du calcul de la médiane ou moyenne T_{m_amb} de température ambiante extérieure ou suite à la comparaison de ladite médiane ou moyenne T_{m_amb} avec le deuxième et le troisième seuil Sₜₕ₂, Sₜₕ₃ de température.

Selon une alternative non représentée, les étapes de confirmations précitées peuvent être exécutées seulement lorsque le résultat de l'étape de comparaison E06 est susceptible d'entraîner l'exécution d'une une étape de programmation de la limitation E07 du niveau maximal autorisé de charge N_{c_max}.

En outre, tel qu'exposé brièvement précédemment, les mesures d'intensité lumineuse réalisées peuvent optionnellement être utilisées afin d'ajuster l'intervalle de temps *I_{m_x}* auquel les mesures de la température ambiante extérieure sont effectuées selon le besoin.

En effet, tel qu'exposé précédemment, l'intervalle de temps *I_{m_x}* prédéfini peut être variable, celui-ci pouvant être ajusté, à titre d'exemple non limitatif, en fonction de paramètres tels que l'heure, l'intensité lumineuse Lₑₓₜ, la localisation et/ou les conditions météorologiques. Le procédé selon l'invention peut alors comprendre une étape de mesure et/ou de détection E14 d'un tel paramètre et une étape d'ajustement E15 de l'intervalle de temps *I_{m_x}* en fonction de l'au moins un paramètre considéré. Notamment, lesdites étapes peuvent être exécutées simultanément à l'exécution de la mesure de la température ambiante extérieure. Egalement, lesdites étapes peuvent être répétées, de façon similaire à ce qui a été exposé précédemment en référence aux mesures d'intensité lumineuse extérieure ou de température du dispositif de batterie.

Selon des exemples particuliers, l'intervalle de temps *I_{m_x}* peut être variable selon qu'il fait jour ou nuit, par exemple en fonction de l'heure et/ou de l'intensité lumineuse Lₑₓₜ mesurée, l'intervalle de temps étant plus réduit le jour que la nuit. Il en va de même pour la période de l'année, l'intervalle de temps *I_{m_x}* étant plus réduit en période estivale que lors de la période hivernale. Similairement, si des conditions météorologiques susceptibles d'entraîner un échauffement du dispositif de batterie 2, même à l'arrêt, sont détectées, par l'intermédiaire de prévisions météorologiques fournies par un appareil connecté ou un système embarqué dans le véhicule, l'intervalle de temps I_{m_x} peut être réduit et la fréquence de prise de mesures peut ainsi être augmentée. Egalement, lorsque le véhicule 1 est localisé dans une zone géographique présentant des conditions climatiques susceptibles de provoquer l'échauffement du dispositif de batterie 2, par exemple détectée par le moyen de localisation, la fréquence de prise de mesures peut être augmentée.

Les figures 2 et 3 illustrent encore, en lignes pointillées, un exemple d'un mode d'exécution, optionnel, du procédé selon l'invention, dans lequel la programmation de la limitation E07 du niveau maximal autorisé de charge N_{c_max} dépend de l'accord de l'utilisateur, en particulier afin de ne pas impacter sa mobilité. En ce sens, le procédé peut comprendre, lorsqu'il est déterminé que le niveau de charge doit être fixé au niveau intermédiaire N_{c_max_care} et préalablement à la programmation de ladite limitation E07, une étape de détection E16 d'un besoin de mobilité, programmé ou renseigné par l'utilisateur. Le besoin de mobilité peut être déterminé sur la base d'une destination renseignée par l'utilisateur via le moyen de localisation 10 et/ou via un appareil connecté. L'unité de traitement 4, ou tout autre calculateur embarqué dans le véhicule 1 peut alors estimer une autonomie requise pour effectuer un trajet vers la destination renseignée et définir, si le niveau intermédiaire de charge N_{c_max_care} permet d'effectuer le trajet désiré sans nécessiter de recharge du dispositif de batterie 2 ou non. Si la limitation du niveau de charge au niveau intermédiaire impacte la mobilité du véhicule 1 d'une manière différente de ce qui pourrait être observé avec le niveau intégral de charge N_{c_max_full}, le système de gestion 3 peut alors informer, par l'intermédiaire de l'interface Homme-machine 12, l'utilisateur que la programmation de la limitation de la charge à un niveau intermédiaire prévue pour la prochaine charge, impactera sa mobilité. Le système peut, par exemple, informer l'utilisateur d'un tel fait au moment d'un démarrage du véhicule ou au moment du déclenchement d'une charge. L'exécution de l'étape de limitation E07 à un niveau intermédiaire de charge peut alors être soumise à une condition d'acceptation de ladite limitation par l'utilisateur du véhicule 1.

L'invention concerne, en outre, un procédé de charge 200 du dispositif de batterie 2. Ledit procédé comprend, dans un premier temps, les étapes du procédé de gestion 100 exposé précédemment, lesdites étapes étant exécutées en prévision d'une charge du véhicule 1. Autrement dit, lesdites étapes sont essentiellement exécutées avant une charge, ou entre deux charges. Une fois la programmation de la limitation E07 mise en œuvre, lorsqu'une étape de charge E20 du dispositif de batterie 2 est exécutée, le niveau maximal autorisé de charge N_{c_max} est limité au niveau, intégrale ou intermédiaire, préalablement défini. Le module de contrôle 7 assure que la charge ne puisse être réalisée que jusqu'au niveau de charge maximale adapté. Il est entendu qu'une telle limitation ne peut être mise en œuvre qu'à condition que le niveau de charge du dispositif de batterie 2, au moment de l'exécution du procédé de gestion 100 et préalablement à la charge, soit inférieur au niveau de charge maximale intermédiaire.

De manière optionnelle, le procédé de charge 200 peut également comprendre une étape de détection E21 d'une charge du véhicule 1. La mise en œuvre d'une charge du véhicule 1 peut être détectée par l'intermédiaire du calculateur BMS et/ou par l'intermédiaire de l'unité de traitement 4 et/ou par la détection de la connexion d'une prise de charge équipant le véhicule 1 sur une station de charge. La phase de surveillance 150 peut alors être interrompue dès lors qu'une charge E20 est initiée, c'est-à-dire dès lors qu'une charge est détectée. Un nouveau cycle d'exécution du procédé de gestion selon l'invention peut alors être déclenché.

Selon un mode de réalisation alternatif, non représenté, la phase de surveillance 150 peut être maintenue suite à l'étape de charge et interrompue, comme précédemment exposé, seulement lorsque la médiane ou moyenne T_{m_amb} de température calculée est inférieure au deuxième seuil Sₜₕ₂ de température.

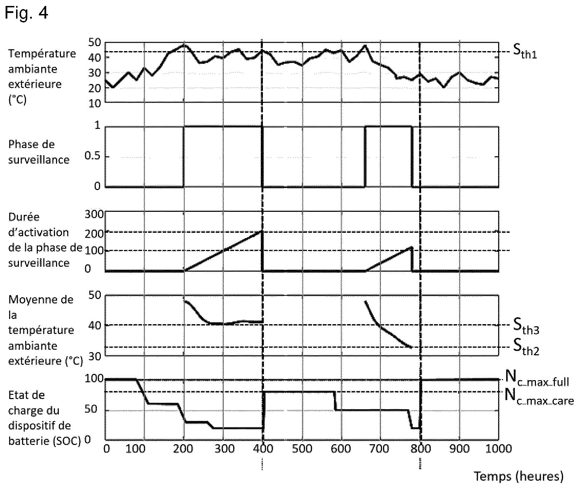

La figure 4 illustre un exemple du déroulé du procédé de charge 200 selon l'invention. Sur l'ensemble de la durée du diagramme temporel illustré, le véhicule 1 est considéré comme étant stationné à l'arrêt. Après 200 heures, lors d'un réveil du module de contrôle 7, alors qu'une mesure de contrôle de la température est effectuée. Une température extérieure supérieure au premier seuil Sₜₕ₁ est détectée. Le module de contrôle 7 déclenche la phase de surveillance 150 de la température ambiante extérieure afin de calculer la médiane ou moyenne T_{m_amb} de température mesurées lors de réveils périodiques programmé à des intervalles de temps I_{m_s} prédéfinis.

Après 370 heures, la phase de surveillance 150 a été activée pendant un temps t_{act} supérieur au seuil de temps d'activation S_{act_min} prédéfini, par exemple fixé à 100 heures, et la médiane ou moyenne T_{m_amb} de la température ambiante extérieure est supérieure au troisième seuil Sₜₕ₃ de température. Le module de contrôle 7 active la limitation du niveau maximal autorisé de charge au niveau intermédiaire, ici à 80% de la capacité maximale de charge, pour la prochaine charge du dispositif de batterie 2 afin d'assurer la durabilité de celui-ci.

Après 400 heures, l'utilisateur recharge le dispositif de batterie 2. La charge de la batterie s'arrête automatiquement au niveau maximal autorisé intermédiaire. La phase de surveillance 150 est interrompue. Après 660 heures, lors d'un réveil du module de contrôle 7, il est à nouveau détecté une température ambiante extérieure supérieure au premier seuil Sₜₕ₁. À la suite de cette détection E01, le module de contrôle 7 électronique active à nouveau la phase de surveillance 150 de la température extérieure afin de calculer la médiane ou moyenne T_{m_amb} des mesures de la température ambiante extérieure à partir des mesures réalisées à compter du lancement de cette nouvelle phase de surveillance 150.

Après 780 heures, la phase de surveillance 150 a été activée pendant une durée de 120 heures, supérieure au seuil de temps d'activation S_{act_min} prédéfini de 100 heures. Si la médiane ou moyenne T_{m_amb} de la température ambiante extérieure est inférieure au deuxième seuil Sₜₕ₂ de température, le module de contrôle électronique programme la limite de charge maximale afin de permettre une charge intégrale du dispositif de batterie lors de la charge suivante et interrompt la phase de surveillance 150 de la température extérieure médiane ou moyenne T_{m_amb}. Une nouvelle phase de surveillance ne sera déclenchée que si une température extérieure supérieure au premier seuil Sₜₕ₁ est détectée lors de la phase de veille.

Après 800 heures, l'utilisateur charge le dispositif de batterie 2 de son véhicule 1. Le dispositif de batterie 2 peut être chargé jusqu'au niveau maximal de sa capacité puisque les températures ambiantes extérieures détectées ne sont pas susceptibles d'endommager le dispositif de batterie 2 et que le niveau maximal autorisé de charge n'a pas nécessité de nouvelle actualisation.

Le procédé et le système selon l'invention permettent ainsi avantageusement une gestion préventive du dispositif de batterie en fonction du contexte extérieur au véhicule en vue de sa charge. Il en résulte une optimisation de la durabilité mais également de l'exploitation des performances du dispositif de traitement.

La présente invention ne saurait toutefois se limiter aux moyens et modes décrits et illustrés ici et elle s'étend également à tout moyen ou mode équivalents et à toute combinaison techniquement opérante de tels moyens dans la mesure où ils remplissent *in fine* les fonctionnalités décrites et illustrées dans le présent document.

## Revendications

1. Procédé de gestion (100) d'un dispositif de batterie (2) électrique pour un véhicule (1) à motorisation électrique ou hybride, le procédé comprenant, en prévision d'une charge du dispositif de batterie (2), une étape de détection (E01) d'une température ambiante extérieure (T_{amb}) au véhicule (1) par au moins un capteur (5) et une étape de comparaison (E02) de la température ambiante extérieure (T_{amb}) mesurée avec un premier seuil (Sₜₕ₁) de température prédéfini, le procédé comprenant, en outre, lorsque la température mesurée est supérieure ou égale au premier seuil (Sₜₕ₁) :
- une étape d'activation (E03) d'une phase de surveillance (150) de la température extérieure afin d'effectuer, par l'intermédiaire de l'au moins un capteur (5), une mesure de la température ambiante extérieure (T_{amb}) à intervalle de temps (*I_{m_x}*) prédéterminé et d'enregistrer ladite mesure sur une unité de mémoire (6) ; et
- une étape de calcul (E05) d'une médiane ou d'une moyenne (T_{m_amb}) des mesures de température ambiante extérieure (T_{amb}) réalisées depuis un instant t₀ d'activation de la phase de surveillance (150) et une étape de comparaison (E06) de ladite médiane ou de ladite moyenne (T_{m_amb}) avec un deuxième seuil (Sₜₕ₂) de température et un troisième seuil (Sₜₕ₃) de température prédéfinis, le troisième seuil (Sₜₕ₃) étant supérieur au deuxième seuil (Sₜₕ₂) ; et
- une étape de programmation de la limitation (E07) d'un niveau maximal autorisé de charge (N_{c_max}) du dispositif de batterie (2), par l'intermédiaire d'un module de contrôle (7), à un niveau intermédiaire (N_{c_max_care}) de charge, inférieur à une capacité maximale de charge du dispositif de batterie (2), mise en œuvre lorsque la médiane ou la moyenne (T_{m_amb}) de température est supérieure ou égale au troisième seuil (Sₜₕ₃) ;
- une étape de programmation de la limitation (E07) du niveau maximal autorisé de charge (N_{c_max}) du dispositif à un niveau de charge intégrale (N_{c_max_full}), égal à la capacité maximale de charge du dispositif de batterie (2), et une étape d'interruption (E08) de la phase surveillance (150), lesdites étapes étant mises en œuvre lorsque la médiane ou la moyenne (T_{m_amb}) de température est inférieure au deuxième seuil (Sₜₕ₂).

2. Procédé de gestion (100) selon la revendication précédente, comprenant, suite à l'activation de la phase de surveillance (150), une étape de détermination (E090) d'un temps écoulé (t_{act}) depuis l'activation de la phase de surveillance (150) et une étape de comparaison (E091) du temps écoulé (t_{act}) déterminé avec un seuil minimal de temps d'activation (S_{act_min}) prédéfini, l'étape de programmation de la limitation (E07) adaptée étant mise en œuvre seulement lorsque le temps écoulé est supérieur ou égal au seuil minimal de temps d'activation (S_{act_min}).

3. Procédé de gestion (100) selon l'une des revendications précédentes, comprenant, en outre, une étape de détection (E01) d'une intensité lumineuse (Lₑₓₜ) extérieure au véhicule (1) et une étape de comparaison (E02) de l'intensité lumineuse (Lₑₓₜ) mesurée avec un seuil de luminosité (S_{L_ext}) prédéfini, l'étape de programmation de la limitation (E07) adaptée étant mise en œuvre seulement lorsque le niveau d'intensité lumineuse mesuré est supérieur ou égal à un seuil de temps prédéfini (S_{L_ext}).

4. Procédé de gestion (100) selon l'une des revendications précédentes, comprenant, en outre, une étape de mesure (E12) d'une température (T_{batt}) du dispositif de batterie (2) et une étape de comparaison (E13) de la température (T_{batt}) mesurée avec un seuil de détection (S_{r_batt}) d'un échauffement du dispositif, prédéfini, l'étape de programmation de la limitation (E07) à un niveau intermédiaire de charge (N_{c_max_care}) étant mise en œuvre seulement lorsque la température (T_{batt}) mesurée du dispositif de batterie (2) est supérieure ou égale au seuil de détection (S_{T_batt}) d'un échauffement du dispositif de batterie (2).

5. Procédé de gestion (100) selon l'une des revendications précédentes, comprenant, en outre, une étape d'ajustement de l'intervalle de temps (*I_{m_x}*) auquel les mesures de la température ambiante extérieure (T_{amb}) sont effectuées en fonction d'au moins un paramètre extérieur au véhicule (1).

6. Procédé de gestion (100) selon l'une des revendications précédentes, comprenant, préalablement à l'étape de programmation de la limitation (E07) adaptée, une étape de détection (E16) d'un besoin de mobilité, programmé ou renseigné par l'utilisateur, l'exécution de l'étape de programmation de la limitation (E07) à un niveau intermédiaire de charge (N_{c_max_care}) étant soumise à une condition d'acceptation de ladite limitation par un utilisateur du véhicule (1).

7. Procédé de charge (200) d'un dispositif de batterie (2) comprenant, dans un premier temps, l'ensemble des étapes du procédé de gestion (100) selon l'une des revendications précédentes, puis une étape de charge (E20) du dispositif de batterie (2) au cours de laquelle le niveau maximal autorisé de charge (N_{c_max}) est limité au niveau de charge, intégrale ou intermédiaire, préalablement défini.

8. Procédé de charge (200) selon la revendication précédente, comprenant une étape de détection (E21) d'une charge du véhicule (1) et une étape d'interruption de la phase de surveillance (150) dès lors qu'une charge est mise en œuvre.

9. Système de gestion (3) d'un dispositif de batterie (2) électrique comprenant des éléments matériels et/ou logiciels mettant en œuvre le procédé de gestion (100) selon l'une des revendications précédentes, les éléments matériels comportant au moins un capteur (5) de température ambiante extérieure, une unité de traitement (4) apte à recevoir des mesures de l'au moins un capteur (5), une unité de mémoire (6) et un module de contrôle (7) du dispositif de batterie (2).

10. Véhicule (1) automobile à motorisation hybride ou électrique comprenant au moins un dispositif de batterie (2) électrique et un système de gestion (3) selon la revendication précédente.

## Patentansprüche

1. Managementverfahren (100) für eine elektrische Batterievorrichtung (2) für ein Fahrzeug (1) mit Elektro- oder Hybridantrieb, wobei das Verfahren, in Erwartung eines Ladens der Batterievorrichtung (2), einen Schritt des Detektierens (E01) einer Außenumgebungstemperatur (T_{amb}) des Fahrzeugs (1) durch mindestens einen Sensor (5) und einen Schritt des Vergleichens (E02) der gemessenen Außenumgebungstemperatur (T_{amb}) mit einem ersten vorgegebenen Temperaturschwellenwert (Sₜₕ₁) umfasst, wobei das Verfahren ferner, wenn die gemessene Temperatur größer oder gleich dem ersten Schwellenwert (Sₜₕ₁) ist, Folgendes umfasst:
- einen Schritt des Aktivierens (E03) einer Überwachungsphase (150) der Außentemperatur, um über den mindestens einen Sensor (5) eine Messung der Außenumgebungstemperatur (T_{amb}) mit vorbestimmtem Zeitintervall (I_{m_x}) vorzunehmen und die Messung in einer Speichereinheit (6) zu speichern; und
- einen Schritt des Berechnens (E05) eines Medianwerts oder eines Mittelwerts (T_{m_amb}) der Messungen der Außenumgebungstemperatur (T_{amb}), die seit einem Zeitpunkt t₀ der Aktivierung der Überwachungsphase (150) durchgeführt wurden, und einen Schritt des Vergleichens (E06) des Medianwerts oder des Mittelwerts (T_{m_amb}) mit einem zweiten vorgegebenen Temperaturschwellenwert (Sₜₕ₂) und einem dritten vorgegebenen Temperaturschwellenwert (Sₜₕ₃) , wobei der dritte Schwellenwert (Sₜₕ₃) größer als der zweite Schwellenwert (Sₜₕ₂) ist; und
- einen Schritt des Programmierens der Begrenzung (E07) eines höchstzulässigen Ladezustands (N_{c_max}) der Batterievorrichtung (2) mittels eines Steuermoduls (7) auf einen mittleren Ladezustand (N_{c_max_care}) , der geringer als eine maximale Ladekapazität der Batterievorrichtung (2) ist, der durchgeführt wird, wenn der Medianwert oder der Mittelwert (T_{m_amb}) der Temperatur größer oder gleich dem dritten Schwellenwert (Sₜₕ₃) ist;
- einen Schritt des Programmierens der Begrenzung (E07) des höchstzulässigen Ladezustands (N_{c_max}) der Vorrichtung auf einen vollen Ladezustand (N_{c_max_full}), der gleich der maximalen Ladekapazität der Batterievorrichtung (2) ist, und einen Schritt des Unterbrechens (E08) der Überwachungsphase (150), wobei die Schritte durchgeführt werden, wenn der Medianwert oder der Mittelwert (T_{m_amb}) der Temperatur kleiner als der zweite Schwellenwert (Sₜₕ₂) ist.

2. Managementverfahren (100) nach dem vorhergehenden Anspruch, umfassend, nach der Aktivierung der Überwachungsphase (150), einen Schritt des Bestimmens (E090) einer seit der Aktivierung der Überwachungsphase (150) vergangenen Zeit (t_{act}) und einen Schritt des Vergleichens (E091) der bestimmten vergangenen Zeit (t_{act}) mit einem vorgegebenen minimalen Schwellenwert der Aktivierungszeit (S_{act_min}), wobei der Schritt des Programmierens der geeigneten Begrenzung (E07) nur durchgeführt wird, wenn die vergangene Zeit größer oder gleich dem minimalen Schwellenwert der Aktivierungszeit (S_{act_min}) ist.

3. Managementverfahren (100) nach einem der vorhergehenden Ansprüche, umfassend ferner einen Schritt des Detektierens (E01) einer Lichtintensität (Lₑₓₜ) außerhalb des Fahrzeugs (1) und einen Schritt des Vergleichens (E02) der gemessenen Lichtintensität (Lₑₓₜ) mit einem vorgegebenen Helligkeitsschwellenwert (S_{L_ext}) , wobei der Schritt des Programmierens der geeigneten Begrenzung (E07) nur durchgeführt wird, wenn das gemessene Lichtintensitätsniveau größer oder gleich einem vorgegebenen Zeitschwellenwert (S_{L_ext}) ist.

4. Managementverfahren (100) nach einem der vorhergehenden Ansprüche, umfassend ferner einen Schritt des Messens (E12) einer Temperatur (T_{batt}) der Batterievorrichtung (2) und einen Schritt des Vergleichens (E13) der gemessenen Temperatur (T_{batt}) mit einem vorgegebenen Detektionsschwellenwert (S_{T_batt}) für eine Erwärmung der Vorrichtung, wobei der Schritt des Programmierens der Begrenzung (E07) auf einen mittleren Ladezustand (N_{c_max_care}) nur durchgeführt wird, wenn die gemessene Temperatur (T_{batt}) der Batterievorrichtung (2) größer oder gleich dem Detektionsschwellenwert (S_{T_batt}) einer Erwärmung der Batterievorrichtung (2) ist.

5. Managementverfahren (100) nach einem der vorhergehenden Ansprüche, umfassend ferner einen Schritt des Anpassens des Zeitintervalls (I_{m_x}), in dem die Messungen der Außenumgebungstemperatur (T_{amb}) vorgenommen werden, in Abhängigkeit von mindestens einem Parameter außerhalb des Fahrzeugs (1).

6. Managementverfahren (100) nach einem der vorhergehenden Ansprüche, umfassend, vor dem Schritt des Programmierens der geeigneten Begrenzung (E07), einen Schritt des Detektierens (E16) eines Mobilitätsbedarfs, der programmiert ist oder von dem Benutzer eingegeben wird, wobei die Ausführung des Schritt des Programmierens der Begrenzung (E07) auf einen mittleren Ladezustand (N_{c_max_care}) einer Bedingung der Annahme der Begrenzung durch einen Benutzer des Fahrzeugs (1) unterliegt.

7. Ladeverfahren (200) für eine Batterievorrichtung (2), umfassend zunächst alle Schritte des Managementverfahrens (100) nach einem der vorhergehenden Ansprüche, dann einen Schritt des Ladens (E20) der Batterievorrichtung (2), in dessen Verlauf der höchstzulässige Ladezustand (N_{c_max}) auf den zuvor definierten vollen oder mittleren Ladezustand begrenzt wird.

8. Ladeverfahren (200) nach dem vorhergehenden Anspruch, umfassend einen Schritt des Detektierens (E21) eines Ladens des Fahrzeugs (1) und einen Schritt des Unterbrechens der Überwachungsphase (150), sobald ein Laden durchgeführt wird.

9. Managementsystem (3) für eine elektrische Batterievorrichtung (2), umfassend Hardware- und/oder Softwareelemente, die das Managementverfahren (100) nach einem der vorhergehenden Ansprüche durchführen, wobei die Hardwareelemente mindestens einen Sensor (5) für die Außenumgebungstemperatur, eine Verarbeitungseinheit (4), die geeignet ist, Messungen von dem mindestens ein Sensor (5) zu empfangen, eine Speichereinheit (6) und ein Steuermodul (7) für die Batterievorrichtung (2) aufweisen.

10. Kraftfahrzeug (1) mit Hybrid- oder Elektroantrieb, das mindestens eine elektrische Batterievorrichtung (2) und ein Managementsystem (3) nach dem vorhergehenden Anspruch umfasst.

## Claims

1. Method (100) for managing an electric battery device (2) for an electric or hybrid motor vehicle (1), the method comprising, in anticipation of charging of the battery device (2), a step (E01) of detecting an ambient temperature (T_{amb}) outside the vehicle (1) using at least one sensor (5) and a step (E02) of comparing the measured outside ambient temperature (T_{amb}) with a first predefined temperature threshold (Sₜₕ₁), the method furthermore comprising, when the measured temperature is greater than or equal to the first threshold (Sₜₕ₁):
- a step (E03) of activating a phase (150) of monitoring the outside temperature in order, via the at least one sensor (5), to measure the outside ambient temperature (T_{amb}) at a predetermined time interval (I_{m_x}) and to record said measurement on a memory unit (6); and
- a step (E05) of calculating a median or an average (T_{m_amb}) of the outside ambient temperature measurements (T_{amb}) carried out from a time t₀ of activation of the monitoring phase (150), and a step (E06) of comparing said median or said average (T_{m_amb}) with a second predefined temperature threshold (Sₜₕ₂) and a third predefined temperature threshold (Sₜₕ₃), the third threshold (Sₜₕ₃) being greater than the second threshold (Sₜₕ₂) ; and
- a step (E07) of programming the limit of a maximum authorized level of charge (N_{c_max}) of the battery device (2), via a control module (7), to an intermediate level of charge (N_{c_max_care}), lower than a maximum charge capacity of the battery device (2), implemented when the temperature median or average (T_{m_amb}) is greater than or equal to the third threshold (Sₜₕ₃);
- a step (E07) of programming the limit of the maximum authorized level of charge (N_{c_max}) of the device to a full level of charge (N_{c_max_full}), equal to the maximum charge capacity of the battery device (2), and a step (E08) of interrupting the monitoring phase (150), said steps being implemented when the temperature median or average (T_{m_amb}) is lower than the second threshold (Sₜₕ₂).

2. Management method (100) according to the preceding claim, comprising, following activation of the monitoring phase (150), a step (E090) of determining a time (t_{act}) that has elapsed since the activation of the monitoring phase (150) and a step (E091) of comparing the determined elapsed time (t_{act}) with a predefined minimum activation time threshold (S_{act_min}), the step (E07) of programming the adapted limit being implemented only when the elapsed time is greater than or equal to the minimum activation time threshold (S_{act_min}) .

3. Management method (100) according to either of the preceding claims, furthermore comprising a step (E01) of detecting a luminous intensity (Lₑₓₜ) outside the vehicle (1) and a step (E02) of comparing the measured luminous intensity (Lₑₓₜ) with a predefined brightness threshold (S_{L_ext}), the step (E07) of programming the adapted limit being implemented only when the measured luminous intensity level is greater than or equal to a predefined time threshold (S_{L_ext}).

4. Management method (100) according to one of the preceding claims, furthermore comprising a step (E12) of measuring a temperature (T_{batt}) of the battery device (2) and a step (E13) of comparing the measured temperature (T_{batt}) with a predefined threshold (S_{T_batt}) for detecting heating of the device, the step (E07) of programming the limit to an intermediate level of charge (N_{c_max_care}) being implemented only when the measured temperature (T_{batt})) of the battery device (2) is greater than or equal to the threshold (S_{T_batt}) for detecting heating of the battery device (2).

5. Management method (100) according to one of the preceding claims, furthermore comprising a step of adjusting the time interval (I_{m_x}) at which the measurements of the outside ambient temperature (T_{amb}) are carried out as a function of at least one parameter external to the vehicle (1).

6. Management method (100) according to one of the preceding claims, comprising, prior to the step (E07) of programming the adapted limit, a step (E16) of detecting a need for mobility, programmed or provided by the user, the carrying out of the step (E07) of programming the limit to an intermediate level of charge (N_{c_max_care}) being subject to a condition of said limit being accepted by a user of the vehicle (1).

7. Method (200) for charging a battery device (2), comprising, in a first stage, all of the steps of the management method (100) according to one of the preceding claims, and then a step (E20) of charging the battery device (2), during which the maximum authorized level of charge (N_{c_max}) is limited to the previously defined full or intermediate level of charge.

8. Charging method (200) according to the preceding claim, comprising a step (E21) of detecting charging of the vehicle (1) and a step of interrupting the monitoring phase (150) as soon as charging is implemented.

9. System (3) for managing an electric battery device (2), comprising hardware elements and/or software elements implementing the management method (100) according to one of the preceding claims, the hardware elements comprising at least one outside ambient temperature sensor (5), a processing unit (4) able to receive measurements from the at least one sensor (5), a memory unit (6) and a control module (7) for controlling the battery device (2).

10. Hybrid or electric motor vehicle (1) comprising at least an electric battery device (2) and a management system (3) according to the preceding claim.
